Europäisches Patentamt

European Patent Office

Office européen des brevets

(19)

(11) Veröffentlichungsnummer: **0 334 854**
**B1**

(12) # EUROPÄISCHE PATENTSCHRIFT

(45) Veröffentlichungstag der Patentschrift: 24.10.90

(21) Anmeldenummer: 87907210.6

(22) Anmeldetag: 06.11.87

(86) Internationale Anmeldenummer:
PCT/DE87/00500

(87) Internationale Veröffentlichungsnummer:
WO 88/04408 16.06.88 Gazette 88/13

(51) Int. Cl.⁵: **G 01 D 5/20**

(54) **MESSEINRICHTUNG FÜR DREHWINKEL UND/ODER DREHGESCHWINDIGKEIT.**

(30) Priorität: 13.12.86 DE 3642678

(43) Veröffentlichungstag der Anmeldung:
04.10.89 Patentblatt 89/40

(45) Bekanntmachung des Hinweises auf die
Patenterteilung:
24.10.90 Patentblatt 90/43

(84) Benannte Vertragsstaaten:
DE FR GB IT SE

(56) Entgegenhaltungen:
EP-A-0 029 682
EP-A-0 182 322
WO-A-86/04731
GB-A-2 065 897

(73) Patentinhaber: ROBERT BOSCH GMBH
Postfach 10 60 50
D-7000 Stuttgart 10 (DE)

(72) Erfinder: BAUER, Hans-Peter
Gebersheimer Weg 28
D-7257 Ditzingen (DE)
Erfinder: DOBLER, Klaus
Bettäckerstr. 12
D-7016 Gerlingen (DE)
Erfinder: HACHTEL, Hansjörg
Buchenstr. 4
D-7251 Weissach (DE)

EP 0 334 854 B1

## Beschreibung

Die Erfindung geht aus von einer Meßeinrichtung zur berührungsfreien Erfassung eines Drehwinkels und/oder Drehgeschwindigkeit nach der Gattung des Hauptanspruchs. Es ist bereits aus der GB—A—2065897 eine Meßeinrichtung bekannt, bei der der Drehwinkel mit Hilfe eines Wirbelstromsensors bestimmt wird. Dabei sind auf einer Scheibe Bereiche aus elektrisch leitfähigem Material angeordnet, in denen von einer von Wechselstrom durchflossenen Sensorspule Wirbelströme erzeugt werden. Dadurch wird die Impedanz der Spule und die an der Spule anliegende Spannung verändert. Da das realisierbare Verhältnis zwischen der Flächenzunahme und der Winkelzunahme relativ klein ist, ist eine hohe Genauigkeit des Meßsignals erforderlich. Insbesondere wenn durch anschließendes Differenzieren das wegabhängige Meßsignal in das ensprechende Geschwindigkeits- bzw. Beschleunigungssignal umgeformt wird, pflanzt sich der Meßfehler fort. Ferner führen Lagertoleranzen und Taumelbewegungen des Rotors zu Meßfehlern.

In der EP—A—182 322 wird ein Drehwinkelsensor beschrieben, der nach dem sogenannten Transformatorprinzip arbeitet. Hierzu sind möglichst nahe beieinander Primär- ($w_1$) und Sekundärwindungen $w_2$ vorgesehen. Wird die Primärwindung $w_1$ von einem elektrischen Strom durchflossen, so wird in der Sekundärwindung $w_2$ eine Spannung induziert. Mit Hilfe eines Rotors, dessen Welle nicht zentrisch angeordnet ist und der Teilbereiche aus magnetisch unterschiedlichem Material aufweist, wird der Luftspalt zwischen dem Rotor und den Wicklungen $w_1$ bzw. $w_2$ verändert. In Abhängigkeit von der Winkelposition wird der magnetische Widerstand (relutance) des magnetischen Kreises verändert, so daß ein Meßsignal erzeugt wird. Insbesondere Störeinflüsse durch die Umgebung, zum Beispiel Temperatureinflüsse, verfälschen aber das Meßsignal.

Vorteile der Erfindung

Die erfindungsgemäße Einrichtung mit den Merkmalen des unabhängigen Anspruchs hat demgegenüber den Vorteil, daß die Genauigkeit der zu messenden Signale verbessert wird. Durch radiale und axiale Bewegung des Meßkörpers verursachte Meßfehler werden kompensiert. Störeinflüsse durch die Umgebung, z.B. Temperatur, werden eliminiert. Die durch Konturungenauigkeiten der Segmente aus elektrisch leitfähigem Material hervorgerufenen Fehler werden vermindert.

Durch die in den abhängigen Ansprüchen aufgeführten Maßnahmen sind vorteilhafte Weiterbildungen und Verbesserungen der im Anspruch 1 angegebenen Einrichtung möglich.

Zeichnung

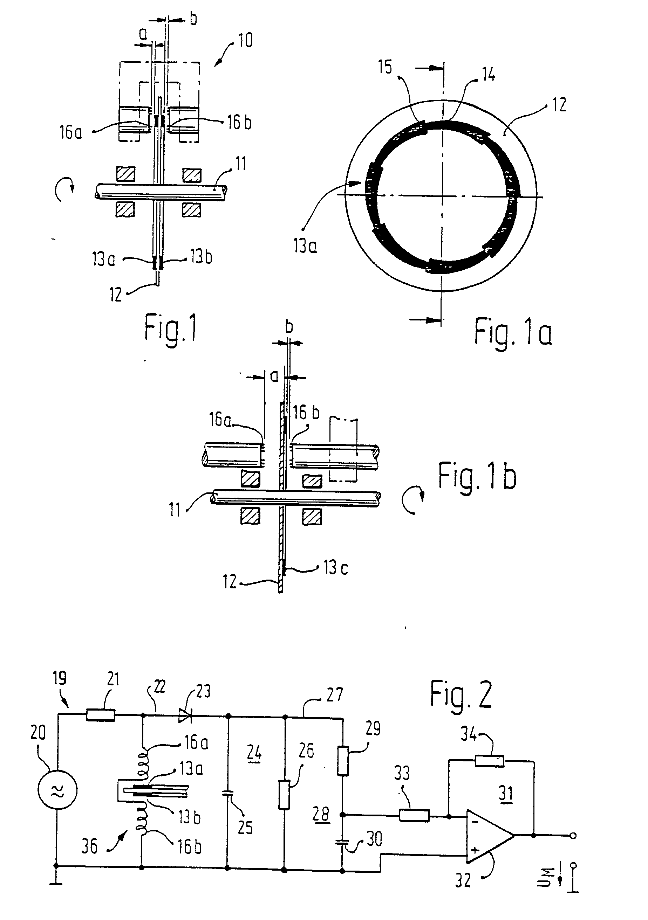

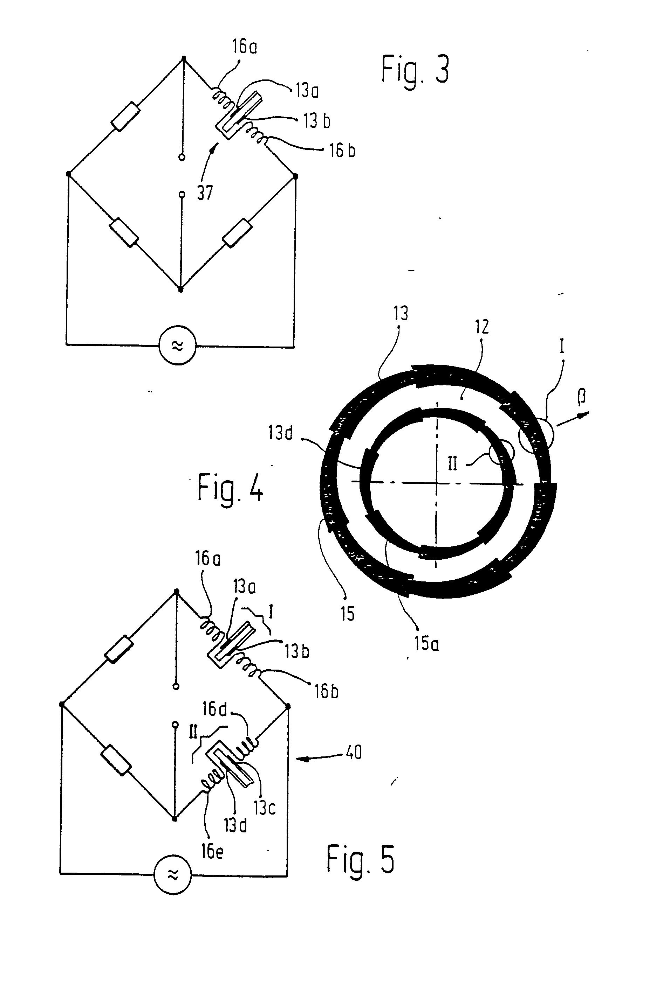

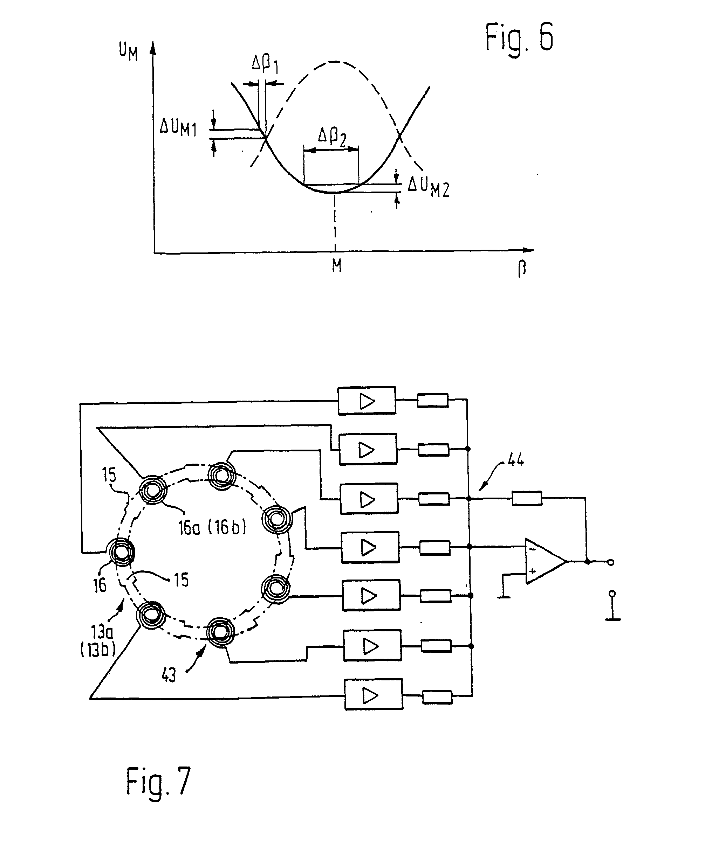

Ein Ausführungsbeispiel der Erfindung ist in der Zeichnung dargestellt und in der nachfolgenden Beschreibung näher erläutert. Es zeigen Figur 1 einen Längsschnitt durch eine erfindungsgemäße Meßeinrichtung, Figur 1a einen Schnitt in Richtung A der Figur 1, Figur 1b eine Abwandlung einer Einzelheit, Figuren 2 und 3 je ein Schaltbild, Figur 4 eine Abwandlung nach Figur 1, und Figur 5 das entsprechende Schaltbild, Figur 6 ein Diagramm zur Meßfehlererläuterung, Figuren 7 bis 9 weitere Abwandlungen des Ausführungsbeispiels.

Beschreibung des Ausführungsbeispiels

In Figur 1 ist eine Meßeinrichtung 10 zur berührungsfreien Bestimmung des Drehwinkels und/oder der Drehgeschwindigkeit einer Welle 11 dargestellt. Auf der Welle 11 ist eine runde Scheibe 12 drehfest befestigt. Statt einer Scheibe 12 kann auch ein beliebig anders geformter Körper verwendet werden, wobei er aber möglichst flach und mit geringem Gewicht bauen soll. Die Scheibe 12 besteht aus elektrisch nicht leitendem Material, z.B. Kunststoff. Auf beiden Stirnseiten der Scheibe 12 sind deckungsgleich die beiden Schichten 13a und 13b aus elektrisch gut leitendem Material aufgebracht, die jeweils ein kreisförmiges Band 14 und segmentartige, sich in oder gegen die Drehrichtung verbreiternde Abschnitte 15 aufweisen. Die Abschnitte 15 sind in Umfangsrichtung der Scheibe 12 gleichmäßig verteilt. Die Schichten 13a und 13b können z.B. aufgalvanisiert, in Dick- oder Dünnschichttechnik aufgebracht, aufgedampft oder aufgeklebt sein. Es ist auch eine Negation möglich, d.h. die Schicht 13a und 13b werden aus einem elektrisch gut leitendem Material herausgeätzt und haben deshalb elektrisch nicht leitende Eigenschaften. Beiden Stirnseiten der Scheibe 12 steht im Bereich der Schichten 13a bzw. 13b jeweils eine Spule 16a bzw. 16b gegenüber, die beide im Raum feststehend und von einem hochfrequenten Wechselstrom durchflossen werden. Der Abstand a bzw. b zwischen den Spulen 16a bzw. 16b und den elektrisch leitenden Schichten 13a bzw. 13b ist möglichst konstant über den gesamten Drehbereich und zu beiden Stirnseiten ungefähr gleich groß auszubilden. Die Spulen 16a und 16b auf beiden Stirnseiten können auch so gewickelt sein, daß sich die Magnetfelder gegenseitig verstärken. Es genügt auch eine einseitig aufgebrechte leitende Schicht 13c, welche ungefähr mittig zwischen den Spulen 16a, 16b positioniert sein muß, wie aus Figur 1b ersichtlich ist. Dabei wirkt die Scheibe 12 näherungsweise physikalisch wie Luft.

Die beiden Spulen 16a und 16b sind in einer in Figur 2 dargestellten Schaltung 19 verschaltet. Ein Wechselspannungsgenerator 20 speist über einen Vorwiderstand 21 die Spulen 16a und 16b mit einer Wechselspannung. An der Spulen 16a, 16b ist ein Sensorsignal 22 abnehmbar, das über eine Diode 23, eine Siebschaltung 24, bestehend aus einem Siebkondensator 25 und einem Ableitwiderstand 26, zugeführt wird. Die gesiebte Signalspannung 27 gelangt über eine Teifpaßanordnung 28, die aus einem Widerstand 29 und einem Kondensator 30 gebildet wird, an eine Verstärkeranordnung 31. Die Verstärkeranordnung 31 ist als invertierende Operationsverstärkerschaltung 32 ausgebildet, deren Verstärkungsfaktor mit den beiden Widerständen 33, 34 einstellbar ist. Die beiden Spulen 16a und 16b können in einer Spannungsteilerschaltung 36 oder wie in Figur 3 bezeigt, in einer sogenannten Halbbrückenschaltung bzw. in einem Zweig einer Wheatston'schen Brücke 37, miteinander verschaltet sein.

Die Widerstandswerte der der Sensorspulen 16 zugeordneten Vorwiderstände 21, die Induktivitäten und ohmschen Widerstandswerte der Sensorspulen 16, die Kapazität der Kondensatoren 25, 30 sowie die Frequenz der Wechselspannungsquelle 19 sind derart zusammen abgestimmt, daß sich eine linear Kennlinie am Abgriff der Auswerteschaltung 19 ergibt.

Werden die beiden Spulen 16a und 16b von einem Wechselstrom durchflossen, so erzeugt das Magnetfeld in der elektrisch leitenden Schichten 13a und 13b Wirbelströme. Je größer dabei die von Magnetfeld durchsetzte Fläche dieser Schichten 13a, 13b ist, desto mehr Wirbelströme werden erzeugt. Durch die mehr erzeugten Wirbelströme wird der Wechselstromwiderstand verringert, was eine Verkleinerung der an den Spulen anliegenden Spannung bewirkt. Dreht sich die Scheibe 12 in Pfeilrichtung, so nimmt die Fläche der Schichten 13a und 13b aufgrund der Abschnitte 15 zu und bei Erreichen der steil abfallenden Flanken der Abschnitte 15 wieder sprungartig ab. Dementsprechend wird auch die Größe der erzeugten Wirbelströme verändert.

Die Scheibe 12 ist so zwischen den beiden Spulen 16a und 16b anzuordnen, daß Wirbelströme in derselben Größenordnung erzeugt werden. Dazu sind auch die Schichten 13a und 13b auf beiden Stirnseiten der Scheibe 12 möglichst deckungsgleich aufzubringen. Wird die Scheibe 12 in axialer Richtung a aufgrund z.B. des Lagerspiels der Welle 11 zwischen den beiden Spulen 16 verschoben, so wird, bewirkt durch den Wirbelstromeffekt, der jeweilige Widerstandswert der beiden Spulen 16a, 16b verändert. Verringert sich z.B. der Abstand a, so wird durch eine Erhöhung der erzeugten Wirbelströme in der Schicht 13a der Widerstandswert der Spule 16a verkleinert. Gleichzeitig bewirkt die zwangsläufig sich ergebende Vergrößerung des Abstandes b eine Verminderung der in der Schicht 13b erzeugten Wirbelströme und damit eine Vergrößerung des Widerstandswertes der Spule 16b. Bei optimaler, gleicher Auslegung, insbesondere der Spulengröß, der Schichtbreite des Abstandes a sind diese Änderungen des Wechselstromwiderstandes nahezu gleich groß, und heben sich weitgehend gegenseitig auf.

In Figur 4 ist eine Abwandlung des Ausführungsbeispiels nach Figur 1a dargestellt. Es sind deckungsgleich auf der Scheibe 12 auf beiden Stirnseiten zwei weitere Schichten 13d bzw. 13e mit einen kleineren Radius aufgebracht. Die Abschnitte 15a der zwei Schichten 13d, 13e verlaufen gegensinnig zu den Abschnitten 15. Jeder Schicht 13d bzw. 13e ist wieder eine eingene Spule 16d, 16e zugeordnet, wie Figur 5 zeigt. Die Spulen 16a und 16b sowie 16d und 16e sind, in einer Brückenschaltung 40 miteinander verschaltet. Die der Schichten 13a, 13b bzw. der Schicht 13d, 13e zugeordneten Spulen bilden jeweils einen der beiden aktiven Äste der Brückenschaltung 40. Zur Verdeutlichung sind die Meßstellen in der Figur 4 und 5 jeweils mit I bzw. II bezeichnet.

In Figur 6 ist der Verlauf der Meßspannung $U_M$ bei einer radialen Verschiebung der Scheibe 12 in Richtung β eingezeichnet, wobei die Spulen etwa in der Mitte der Segmente angeordnet sein sollen. Es ist ersichtlich, daß bei gleicher Radialverschiebung Δβ der dadurch im Bereich des Minimums entsthende Meßfehler $\Delta U_{M2}$ der Kurve viel kleiner ist als der im übrigen Bereich der Kurve entstehende Meßfehler $\Delta U_{M1}$. ein Maximum der Kurve tritt nicht auf, da die Scheibe 12 sich dann bereits außerhalb des Meßbereichs der Spulen 16a, 16b, 16d, 16e befindet.

Außerdem treten noch Meßfehler durch eine Ungenauigkeit der Konturen der Schichten 13a bzw. 13b auf. Insbesondere bei einer weiteren Verarbeitung des Meßsignals durch Differentiation zu einem Geschwindigkeits- oder Beschleunigungssignal sind möglichst genaue Meßsignale erforderlich. Hierzu ist eine möglichst exakte Ausbildung der Konturen der Schichten, der Schichtstärke und eine möglichst ebene Oberfläche und eine homogen leitende Schicht notwendig. Diese Fehler können weitestgehend unterdrückt werden, wenn wie in Figur 7 dargestellt, mit mehreren Spulen 16 pro Schicht 13 auf beiden Stirnseiten gleichzeitig gemessen wird. Es sollen dadurch mehrere Abschnitte 15 der Schichten 13 erfaßt werden. Dabei ist es notwendig, daß die Spulen der jeweiligen Schichten jeweils räumlich an derselben Stelle der Abschnitte 15 angeordnet sind. Durch die Gesetze der Wahrscheinlichkeit werden bei einer möglichst großen Anzahl von Meßstellen diese zufälligen, unterschiedlichen Konturungenauigkeiten aufgehoben. Das Meßsignal wird durch eine Addition der einzelnen Signale der Meßstellen 43 oder durch eine anschließende Mittelwertbildung in einer Auswerteschaltung 44 gebildet.

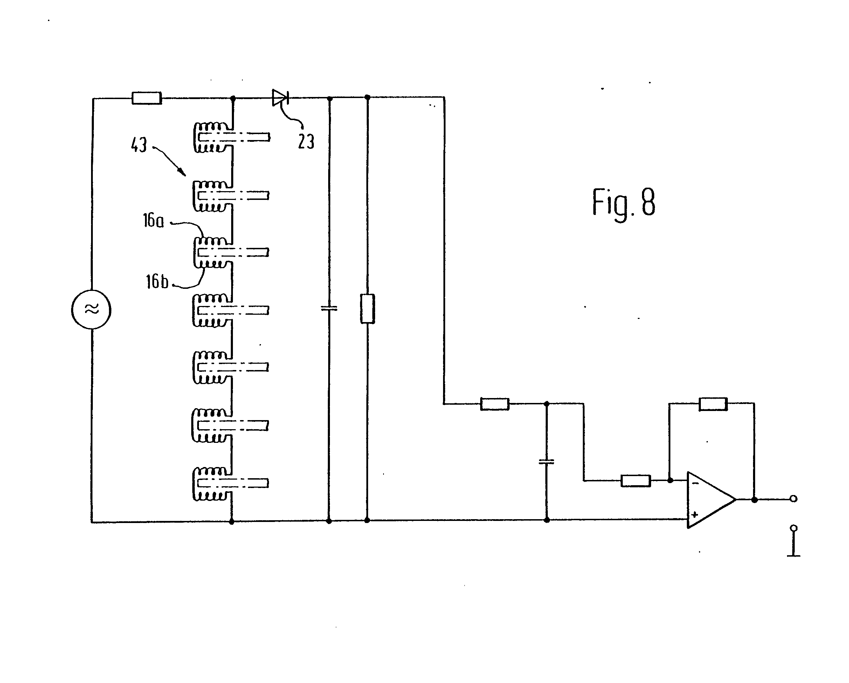

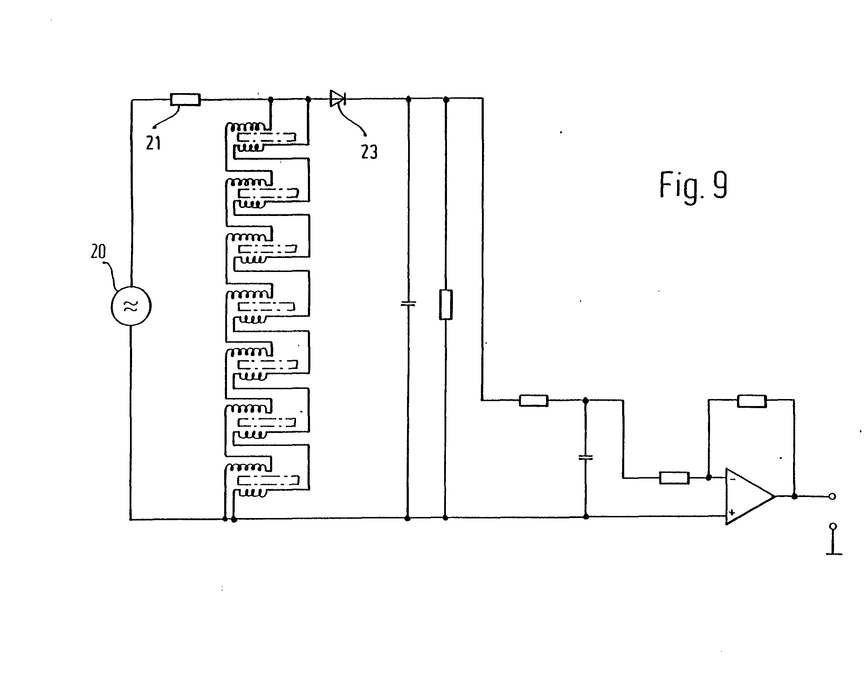

Zur Addition dieser Signale der Meßstellen 43 ist in Figur 8 eine Abwandlung der Schaltung 19 nach Figur 2 dargestellt. Alle Spulen 16a bzw. 16b jeder Meßstelle 43 der beiden Stirnseiten der Scheibe 12 sind in Reihe miteinander geschaltet. Das sich dadurch ergebende Meßsignal wird wie in Figur 3 weiterverarbeitet. In Figur 7 sind die Spulen der Meßstellen 43 jeweils einer Stirnseite in Reihe zueinander geschaltet. Die beiden Meßreihen der beiden Stirnseiten sind anschließend zueinander, wie in Figur 9 eingezeichnet oder in Reihe parallel geschaltet.

Selbstverständlich ist es auch möglich, daß die Meßeinrichtung und somit die Spulen 16 und die Schichten 13 nach dem induktiven Verfahren betrieben werden. Dabei gelten sinngemäß die gleichen Verhältnisse. Anstelle der leitenden Flächen treten dann ferromagnetische Schichten als Segmente auf. Allerdings müssen dann die elektrischen leitenden Segmente 13 aus ferromagnetischem Stoff bestehen. In Figur 6 entsteht dann die gestrichelt eingezeichnete Kurve.

**Patentansprüche**

1. Meßeinrichtung (10) zur berührungsfreien Erfassung eines Drehwinkels und/oder eine Drehgeschwindigkeit an einer stehenden oder rotierenden Welle (11) mit einem zur Welle (11) konzentrischen, scheibenartigen Körper (12), der drehfest mit der Welle (11) verbunden ist, und auf dem in Drehrichtung mindestens ein kontinuierlich verlaufender Bereich (13) aus elektrisch leitendem Werkstoff aufgebracht ist, und mit mindestens einer ortsfest zum Körper (12) angeordneten Aufnehmerspule (16), deren Impedanz durch die relative Veränderung der Größe des der bzw. den Spule(n) zugeordneten Bereichs (13) variiert wird, sowie mit einer elektronischen Auswerteschaltung (19) zum Messen der Impedanzänderung der Spule(n) (16), dadurch gekennzeichnet, daß der Bereich (13) einen oder mehrere sich in regelmäßiger Folge vergrößernde Abschnitte (15) aufweist, daß beiden Stirnseiten je mindestens eine eigene Aufnehmerspule (16) angeordnet ist, die Teil der elektronischen Auswerteschaltung (19) sind, so daß eine nahezu lineare Kennlinie für die Erfassung des Drehwinkels und/oder der Drehgeschwindigkeit möglich ist.

2. Meßeinrichtung nach Anspruch 1, dadurch gekennzeichnet, daß die sich auf beiden Stirnseiten des Körpers (12) befindenden Aufnehmerspulen (16a, 16b) in einer Achse angeordnet sind und in Reihe in einen Brückenzweig verschaltet sind.

3. Meßeinrichtung nach Anspruch 1 und/oder 2, dadurch gekennzeichnet, daß sich auf wenigstens einer Stirnseite des Körpers (12) zwei kontinuierlich verlaufende Bereiche (13d, 13e) mit unterschiedlichem Radius aus elektrisch gut leitendem Werkstoff befinden, denen eigene Aufnehmerspulen (16) zugeordnet sind.

4. Meßeinrichtung nach einem der Ansprüche 1 bis 3, dadurch gekennzeichnet, daß die Abschnitte (15, 15a) der beiden Bereiche (13d, 13e) in bezug auf eine Drehrichtung gegensinnig verbreitet bzw. geschmälert werden.

5. Meßeinrichtung nach einem der Ansprüche 1 bis 4, dadurch gekennzeichnet, daß jedem einzelnen Abschnitt (15) eines Bereichs (13) auf beiden Stirnseiten eine eigene Aufnehmerspule (16) zugeordnet ist.

6. Meßeinrichtung nach einem der Ansprüche 1 bis 5, dadurch gekennzeichnet, daß jedem Abschnitt (15) des Bereichs (13) ein eigenes Spulenpaar (16a, 16b) zugeordnet ist, deren Meßsignale einzeln von je einer Auswerteschaltung (19) aufgewertet werden und anschließend addiert werden.

7. Meßeinrichtung nach einem der Ansprüche 1 bis 6, dadurch gekennzeichnet, daß die Aufnehmerspule (16) beider Stirnseiten des Körpers (12) in Reihe miteinander verschaltet sind.

8. Meßeinrichtung nach einem der Ansprüche 1 bis 6, dadurch gekennzeichnet, daß die Aufnehmerspulen (16) einer jeden Stirnseite des Körpers (12) untereinander in Reihe und die Aufnehmerspulen beider Stirnseiten zueinander parallel oder in Reihe verschaltet sind.

9. Meßeinrichtung nach einem der Ansprüche 1 bis 8, dadurch gekennzeichnet, daß die Aufnehmerspulen (16) im Bereich der bei radialer Verschiebung (β) auftretenden minimalen Spannungswert angeordnet sind.

10. Meßeinrichtung nach einem der Ansprüche 1 bis 9, dadurch gekennzeichnet, daß auf beiden Stirnseiten des Körpers (12) deckungsgleich Bereiche (13) angeordnet sind.

11. Meßeinrichtung nach einem der Ansprüche 1 bis 10, dadurch gekennzeichnet, daß die Geometrie der Aufnehmerspulen (16) kreisförmig, oval oder rechteckig ist.

12. Meßeinrichtung nach einem der Ansprüche 1 bis 11, dadurch gekennzeichnet, daß die Aufnehmerspulen (16) in einer Brückenschaltung (37) verschaltet sind, die Teil der Auswerteschaltung (19) ist.

**Revendications**

1. Installation de mesure (10) pour la détection sans contact d'un angle de rotation et/ou d'une vitesse de rotation d'un axe immobile ou rotatif (11) à l'aide d'un organe (12) en forme de disque concentrique à l'axe (11) et solidaire en rotation de cet axe (11), ce disque comportant une zone (13), continue au moins dans la zone de rotation, zone réalisée en un matériau conducteur d'électricité, et au moins une bobine de capteur (16) fixe par rapport au corps (12) et dont l'impédance est modifiée par la variation relative de la grandeur de la zone (13) associée à la bobine ou aux bobines, ainsi qu'un circuit d'exploitation électronique (19) pour mesurer la variation d'impédance de la (des) bobine(s) (16), installation caractérisé en ce que la zone (13) comporte un ou plusieurs segments (15) allant en augmentant dans un ordre régulier, et en ce que sur les deux faces, on a prévu au moins une bobine de détecteur (16) faisant partie du circuit électronique (19) d'exploitation pour permettre d'obtenir une caractéristique pratiquement linéaire pour la détection de l'angle de rotation et/ou de la vitesse de rotation.

2. Installation de mesure selon la revendication 1, caractérisée en ce que les bobines de détecteur (16a, 16b) prévues sur les deux faces de l'organe (12) sont situées sur un axe et sont branchées en série dans une branche de pont.

3. Installation de mesure selon la revendication 1 et/ou 2, caractérisée en ce que sur au moins une face du corps (12), on a deux zones (13d, 13e) continues, présentant un rayon différent, ces zones étant en un matériau bon conducteur d'électricité, et des bobines de détection (16), propres, étant associées à ces zones.

4. Installation de mesure selon l'une des revendications 1 à 3, caractérisée en ce que les segments (15, 15a) des deux zones (13d, 13e) vont en s'élargissant ou en diminuant réciproquement dans un sens de rotation.

5. Installation de mesure selon l'une des revendications 1 à 4, caractérisée en ce qu'à chaque segment (15) d'une zone (13) est associée une bobine de détection (16), propre au niveau des deux faces.

6. Installation de mesure selon l'une des revendications 1 à 5, caractérisée en ce qu'a chaque segment (15) de la zone (13) est associée une paire de bobines (16a, 16b) propres, dont les signaux de mesure sont exploités séparément chaque fois par un circuit d'exploitation (16) et sont alors additionnés.

7. Installation de mesure selon l'une des revendications 1 à 6, caractérisée en ce que les bobines de détection (16) des deux faces de l'organe (12) sont branchées en série.

8. Installation de mesure selon l'une des revendications 1 à 6, caractérisée en ce que les bobines de détection (16) de chaque face de l'organe (12) sont branchées en série et les bobines de détection des deux faces frontales sont branchées en parallèle ou en série.

9. Installation de mesure selon l'une des revendications 1 à 8, caractérisée en ce que les bobines de détection (16) sont prévues dans la zone correspondant à la valeur de tension minimale créée pour le décalage radical ($\beta$).

10. Installation de mesure selon l'une des revendications 1 à 9, caractérisée en ce que des zones superposables (13) sont prévues sur les deux faces de l'organe (12).

11. Installation de mesure selon l'une des revendications 1 à 10, caractérisée en ce que la géométrie des bobines de détection (16) est de forme circulaire, ovale ou rectangulaire.

12. Installation de mesure selon l'une des revendications 1 à 11, caractérisée en ce que les bobines de détection (16) sont branchées suivant un montage en pont (37) faisant partie du circuit d'exploitation (19).

**Claims**

1. Measuring device (10) for contactless determination of a rotation angle and/or rotation speed on a stationary or rotating shaft (11) having a disc-like body (12) which is concentric to the shaft (11) and is connected, fixed in terms of rotation, to the shaft (11) and on which there is applied at least one area (13) running continuously in the direction of rotation and made of electrically conductive material, and having at least one pick-up coil (16), arranged to be fixed in relation to the body (12), the impedance of said coil being varied by the relative changing of the size of the area (13) assigned to the coil or coils, as well as having an electronic evaluation circuit (19) for measuring the impedance change of the coil(s) (16), characterized in that the area (13) has one or more sections (15) which increase in a regular sequence, in that each of the two end faces has at least one pick-up coil (16) of its own associated with it, said pick-up coil being part of the electronic circuit (19), so that an almost linear characteristic line is possible for the determination of the rotation angle and/or of the rotation speed.

2. Measuring device according to Claim 1, characterized in that the pick-up coils (16a, 16b) located on both end faces of the body (12) are arranged in an axle and connected in series to a bridge branch.

3. Measuring device according to Claim 1 and/or 2, characterized in that two areas (13d, 13e) of continuous extension, having a different radius and made of material which is a good electrical conductor are located on at least one end face of the body (12), said areas having their own pick-up coils (16) associated with them.

4. Measuring device according to one of Claims 1 to 3, characterized in that the sections (15, 15a) of the two areas (13d, 13e) are widened or made narrower in opposite directions in relation to a direction of rotation.

5. Measuring device according to one of Claims 1 to 4, characterized in that each individual section (15) of an area (13) on both end faces has its own pick-up coil (16) associated with it.

6. Measuring device according to one of Claims 1 to 5, characterized in that each section (15) of the area (13) has its own pair of coils (16a, 16b) associated with it, the measuring signals of which are individually evaluated by one evaluation circuit (19) in each case, and subsequently added.

7. Measuring device according to one of Claims 1 to 6, characterized in that the pick-up coil [sic] (16) of both end faces of the body (12) are connected in series to one another.

8. Measuring device according to one of Claims 1 to 6, characterized in that the pick-up coils (16) of each end face of the body (12) are connected to one another in series and the pick-up coils of both end faces are connected to one another in parallel or in series.

9. Measuring device according to one of Claims 1 to 8, characterized in that the pick-up coils (16) are arranged in the region of the minimum voltage value which occurs with radial displacement ($\beta$).

10. Measuring device according to one of Claims 1 to 9, characterized in that regions (13) which cover the same area are arranged on both end faces of the body (12).

11. Measuring device according to one of Claims 1 to 10, characterized in that the geometry of the pick-up coils (16) is circular, oval or rectangular.

12. Measuring device according to one of Claims 1 to 11, characterized in that the pick-up coils (16) are connected in a bridge circuit (37) which is part of the evaluation circuit (19).

Fig.1

Fig. 1a

Fig.1b

Fig. 2

Fig. 3

16a
13a
13 b
16 b
37

Fig. 4

13
12
I
β
13d
II
15
15a

Fig. 5

16a
13a
I
13 b
16 b
16d
II
40
13c
13d
16e

Fig. 6

Fig. 7

Fig. 8

Fig. 9